# EUROPÄISCHE PATENTANMELDUNG

(11) **EP 4 353 407 A1**
(43) Veröffentlichungstag der Anmeldung: **17.04.2024**
(21) Anmeldenummer: 22200634.8
(22) Anmeldetag: 10.10.2022
(51) Int. Cl.: B23Q 11/00, A47L 7/00

(54) **SYSTEM UMFASSEND ZWEI STAUBMODULE, SCHNITTSTELLE ZUR VERBINDUNG DER STAUBMODULE UND VERFAHREN ZUM ABSAUGEN VON STAUBGUT AUS EINEM DER STAUBMODULE**

(71) Anmelder: Hilti Aktiengesellschaft, 9494 Schaan (LI)
(72) Erfinder: Hartmann, Markus, 87665 Mauerstetten (DE); Britz, Rory, 82319 Starnberg (DE); Ontl, Rainer, 86899 Landsberg (DE); Ohlendorf, Oliver, 86899 Landsberg (DE)
(74) Vertreter: Hilti Aktiengesellschaft Corporate Intellectual Property

(57) **Zusammenfassung**

System (100) umfassend ein erstes Staubmodul (10) und ein zweites Staubmodul (20), wobei das erste Staubmodul einen ersten Staubsammelbehälter (12) zur Aufnahme von Staubgut (SG) und das zweite Staubmodul einen zweiten Staubsammelbehälter (22) zur Aufnahme von Staubgut aufweist. Mindestens eines der beiden Staubmodule weist eine nicht-arretierbare, pneumatische Schnittstelle (50) zur Verbindung mit dem anderen Staubmodul auf, wobei über die Schnittstelle das Staubgut aus dem Staubsammelbehälter desjenigen Staubmoduls, das die Schnittstelle aufweist, absaugbar ist. In einem zweiten Aspekt betrifft die Offenbarung eine solche nicht-arretierbare, pneumatische Schnittstelle zur Verbindung zweier Staubmodule. In einem weiteren Aspekt betrifft die Offenbarung ein Verfahren zum Absaugen von Staubgut aus einem ersten Staubmodul, wobei das erste Staubmodul über die Schnittstelle mit einem zweiten Staubsmodul verbunden und Staubgut von dem ersten Staubmodul in das zweite Staubmodul abgesaugt werden kann.

## Beschreibung

Die vorliegende Erfindung betrifft ein System umfassend ein erstes Staubmodul und ein zweites Staubmodul, wobei das erste Staubmodul einen ersten Staubsammelbehälter zur Aufnahme von Staubgut und das zweite Staubmodul einen zweiten Staubsammelbehälter zur Aufnahme von Staubgut aufweist. Mindestens eines der beiden Staubmodule weist eine nicht-arretierbare, pneumatische Schnittstelle zur Verbindung mit dem anderen Staubmodul auf, wobei über die Schnittstelle das Staubgut aus dem Staubsammelbehälter desjenigen Staubmoduls, das die Schnittstelle aufweist, absaugbar ist. In einem zweiten Aspekt betrifft die Erfindung eine solche nicht-arretierbare, pneumatische Schnittstelle zur Verbindung zweier Staubmodule. In einem weiteren Aspekt betrifft die Erfindung ein Verfahren zum Absaugen von Staubgut aus einem ersten Staubmodul, wobei das erste Staubmodul über die Schnittstelle mit einem zweiten Staubsmodul verbunden und Staubgut von dem ersten Staubmodul in das zweite Staubmodul abgesaugt werden kann.

### Hintergrund der Erfindung:

Im Stand der Technik sind Staubsammelboxen bekannt, die mit einer Werkzeugmaschine verbunden werden können, um Staub, der bei der Arbeit mit der Werkzeugmaschine entsteht, direkt im Arbeitsbereich der Werkzeugmaschine bzw. ihres Werkzeugs abzusaugen. Diese Staubsammelboxen weisen üblicherweise einen Staubsammelbehälter auf, der in regelmäßigen Abständen ausgeleert werden muss. Die Entleerung der Staubsammelbehälter von konventionellen Staubsammelboxen, wie sie aus dem Stand der Technik bekannt sind, erfolgt häufig dadurch, dass die gesamte Staubsammelbox oder ihr Staubsammelbehälter von der Werkzeugmaschine abgenommen wird, um den Inhalt des Staubsammelbehälters zu entsorgen.

Nachteilig an den bekannten Lösungen für das Entleeren der Staubsammelboxen ist, dass es dabei häufig zu einer sehr hohen, unerwünschten Staubbelastung für den Nutzer des Systems aus Werkzeugmaschine und Staubsammelbox kommt. Wenn der Inhalt des Staubsammelbehälters beispielsweise ausgeschüttet oder in einen anderen Behälter umgefüllt wird, kann sich der Staub in der Umgebung des Nutzers verteilen, so dass der Nutzer und die Umwelt einer hohen Staubexposition ausgesetzt sind. Untersuchungen des Nutzerverhaltens haben darüber hinaus gezeigt, dass die Staubsammelbehälter oder die Staubsammelboxen bei der Entleerung häufig ausgeklopft werden, indem sie beispielsweise an den Behälter, der den Inhalt des Staubsammelbehälters aufnehmen soll, geschlagen werden. Ein solches Vorgehen stellt insbesondere für die empfindlichen Bestandteile der Staubsammelbox, wie beispielsweise für den Filter, ein großes Risiko dar, da es zu Beschädigungen an den empfindlichen Bauteilen kommen kann. Außerdem kann es vorkommen, dass die Staubsammelboxen nicht vollkommen korrekt wieder zusammengebaut werden oder nicht vollständig korrekt an der Werkzeugmaschine montiert werden. Solche etwaigen Fehlmontagen stellen ein weiteres Beschädigungsrisiko für den konventionellen Staubsammelboxen, wie sie aus dem Stand der Technik bekannt sind, dar. Fehlmontagen können nachteiligerweise die Lebenszeit der Staubsammelbox oder ihrer Komponenten verkürzen.

Um die beschriebenen Nachteile und Mängel zu überwinden, sind im Stand der Technik auch solche Lösungen bekannt, bei denen die Staubsammelbox oder ihr Sammelbehälter fest mit einem externen Staubsauger verbunden sind. Allerdings hat sich gezeigt, dass solche kraft- und/oder formschlüssigen Verbindungen zwischen Staubsammelbox bzw. Staubsammelbehälter auf der einen Seite und externem Staubsauger auf der anderen Seite ebenfalls zu Schwierigkeiten führen können. Beispielsweise kann es zu Folgeschäden insbesondere am Filtersystem der Staubsammelbox kommen, wenn ein Nutzer fehlerhafterweise versucht, die Absaugung der Staubsammelbox zusätzlich mit dem externen Staubsauger zu unterstützen, indem durch das Zuschalten des externen Staubsaugers die Gesamtsaugleistung vermeintlich erhöht werden soll.

Darüber hinaus kann es zu sehr hohen Belastungen an der mechanischen Schnittstelle zwischen Staubsammelbox und externem Staubsauger kommen. Die Saugschläuche, die auf Baustellen bzw. im Bereich der Industrie- oder Baustellenstaubsauger verwendet werden, sind oftmals sehr lang und schwer, häufig auch durch anhaftenden Schmutz oder Schlamm. Diese Ausgangssituation führt zu verschiedenen Problemen und Herausforderungen. Beispielsweise können die langen Schläuche, die im Falle einer festen mechanischen Verbindung mit der Staubsammelbox und damit mit der Werkzeugmaschine verbunden sind, ein Sicherheitsrisiko im Sinne einer Stolperfalle darstellen. Des Weiteren kann der Saugschlauch an Hindernissen auf der Baustelle hängenbleiben, so dass die auf die mechanische Schnittstelle wirkenden Kräfte sehr hoch werden und der Saugschlauch möglicherweise sogar von der Schnittstelle abreißen kann. Es hat sich gezeigt, dass die hohen mechanischen Belastungen zu geringen Lebensdauern der kraft- und/oder formschlüssigen festen Schnittstellen führen können. Außerdem kann sowohl die Verbindung zwischen Werkzeugmaschine und Staubsammelbox, als auch die Verbindung zwischen der Staubsammelbox und dem externen Staubsauger Schaden nehmen oder anderweitig mechanisch beeinträchtigt werden.

In einigen Fällen sind sehr schwere und voluminöse Schnittstellenlösungen vorgeschlagen worden, um auf diese Probleme zu reagieren und besonders robuste, langlebige und stabile Verbindungen zwischen den genannten Komponenten herzustellen. Solche schwere und voluminöse Schnittstellenlösungen haben sich in der Praxis allerdings als wenig brauchbar erwiesen, da sie aufgrund des hohen Gewichts und/oder des großen Volumens die Handhabung der Werkzeugmaschine wesentlich erschweren können. Außerdem hat sich herausgestellt, dass solche schweren und voluminösen Schnittstellenlösungen kosten- und materialintensiv in der Herstellung sein können.

Die Aufgabe, die der vorliegenden Erfindung zugrunde liegt, besteht darin, die vorstehend beschriebenen Mängel und Nachteile des Standes der Technik zu überwinden und ein Staubabsaugungssystem bereitzustellen, bei dem der Staubsammelbehälter eines Staubmoduls besonders einfach und unkompliziert entleert werden kann. Darüber hinaus soll die Entleerung des Staubsammelbehälters für den Nutzer möglichst staubarm bzw. staubfrei sein und seine Staubexposition minimieren. Des Weiteren soll das bereitzustellende Staubabsaugungssystem leicht und komfortabel in der Anwendung und in der Handhabung sein und für den Nutzer kein Sicherheitsrisiko darstellen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System umfassend ein erstes Staubmodul und ein zweites Staubmodul vorgesehen, wobei das erste Staubmodul einen ersten Staubsammelbehälter zur Aufnahme von Staubgut und das zweite Staubmodul einen zweiten Staubsammelbehälter zur Aufnahme von Staubgut aufweist. Mindestens eines der beiden Staubmodule weist eine nicht-arretierbare, pneumatische Schnittstelle zur Verbindung mit dem anderen Staubmodul auf, wobei über die Schnittstelle das Staubgut aus dem Staubsammelbehälter desjenigen Staubmoduls, das die Schnittstelle aufweist, absaugbar ist. Mit der Erfindung kann eine besonders staubarme bzw. staubfreie Entleerung des einen Staubmoduls gewährleistet werden. Zusätzlich kann der Aufwand zum Entleeren des Staubsammelbehälters für den Nutzer des Systems mit der Erfindung deutlich reduziert werden, da weder der Staubsammelbehälter, noch das Staubmodul demontiert oder auseinandergebaut werden müssen. Darüber hinaus kann die Entleerung des Staubsammelbehälters erfolgen, ohne dass der Staubsammelbehälter oder andere Komponenten des Staubmoduls ausgeklopft oder ausgeschüttelt werden müssen. Dadurch können Beschädigungen an dem Staubmodul vermieden und seine Lebenszeit erheblich verlängert werden. Die nicht-arretierbare, pneumatische Schnittstelle wird zur Vereinfachung im Folgenden vorzugsweise auch als «Schnittstelle» bezeichnet.

Es ist im Sinne der Erfindung ganz besonders bevorzugt, dass die Schnittstelle zwischen dem Staubsammelbehälter des einen Staubmoduls und einem Einlass des anderen Staubmoduls besteht bzw. angeordnet vorliegt. Auf diese Weise kann sichergestellt werden, dass das Staubgut aus demjenigen Staubmodul, das die Schnittstelle aufweist, abgesaugt werden kann. Beispielsweise kann die nicht-arretierbare pneumatische Schnittstelle Bestandteil des ersten Staubmoduls sein. Mit anderen Worten weist in diesem Ausführungsbeispiel der Erfindung das erste Staubmodul die nicht-arretierbare pneumatische Schnittstelle auf, über die das erste Staubmodul mit dem zweiten Staubmodul verbunden werden kann. Es ist im Sinne der Erfindung ganz besonders bevorzugt, dass der (erste) Staubsammelbehälter des ersten Staubmoduls mit dem Einlass des zweiten Staubmoduls verbunden werden kann. Es ist dann möglich, dass über die Schnittstelle das Staubgut, das sich im (ersten) Staubsammelbehälter des ersten Staubmoduls befindet, aus dem ersten Staubmodul abgesaugt und in das zweite Staubmodul eingesaugt werden kann. Dabei kann das Staubgut aus dem ersten Staubmodul insbesondere in den Staubsammelbehälter des zweiten Staubmoduls eingesaugt werden. Mit anderen Worten kann Staubgut von dem ersten in das zweite Staubmodul überführt oder übertragen werden.

Der Begriff «nicht-arretierbar» bedeutet im Sinne der Erfindung, dass das erste und das zweite Staubmodul während des Betriebs des ersten Staubmoduls oder einer Werkzeugmaschine, an der das erste Staubmodul befestigt vorliegt, nicht miteinander verbunden vorliegen. Wenn der Staubsammelbehälter des ersten Staubmoduls ausgeleert werden soll, kann beispielsweise ein erstes Ende eines Saugschlauches des zweiten Staubmoduls mit der Schnittstelle des ersten Staubmoduls in Kontakt gebracht und die Schnittstelle auf diese Weise für das Staubgut durchgängig gemacht werden («Öffnen der Schnittstelle»). Im geöffneten Zustand der Schnittstelle kann Staubgut von dem ersten Staubmodul in das zweite Staubmodul gelangen, wobei das Staubgut insbesondere von dem ersten in das zweite Staubmodul eingesaugt werden kann. Das Öffnen der Schnittstelle kann im Sinne der Erfindung bevorzugt auch als «pneumatische Aktivierung der Schnittstelle» bezeichnet werden. Es ist im Sinne der Erfindung bevorzugt, dass durch eine pneumatisch aktivierte Schnittstelle Staubgut von dem ersten in das zweite Staubmodul überführt werden kann. Vorzugsweise besteht bei einer nicht-arretierbaren Schnittstelle nur dann eine staubgutdurchgängige Verbindung zwischen den beiden Staubmodulen, solange wie das eine Staubmodul mit einer Anpresskraft an das andere Staubmodul gedrückt wird. Es kann im Sinne der Erfindung auch bevorzugt sein, dass Komponenten der Staubmodule miteinander in engen Kontakt gebracht bzw. aneinandergedrückt werden. Das erste Ende des Saugschlauchs, das mit der Schnittstelle in engen Kontakt gebracht werden kann, kann im Sinne der Erfindung vorzugsweise auch als Einlass-Kontakt des zweiten Staubmoduls bezeichnet werden. Es ist im Sinne der Erfindung ganz besonders bevorzugt, dass die nicht-arretierbare, pneumatische Schnittstelle durch einen engen Kontakt und/oder eine Anpresskraft pneumatisch aktivierbar ist, d.h. geöffnet werden kann. Durch Beenden oder Aufheben des engen Kontakts wird durch Schnittstelle vorzugsweise automatisch wieder geschlossen, wobei eine so beschaffene Schnittstelle im Sinne der Erfindung bevorzugt als «selbst-schließende» Schnittstelle bezeichnet wird.

Es kann im Sinne der Erfindung auch bevorzugt sein, dass die Schnittstelle manuell geöffnet wird. So ist es z.B. möglich, dass die Schnittstelle durch einen Deckel verschlossen wird, welcher vor dem Absaugen abgenommen und nach Beendigung des Absaugvorgangs wieder aufgesetzt wird.

Zur Vereinfachung der Beschreibung wird im Folgenden davon ausgegangen, dass zumindest das erste Staubmodul eine nicht-arretierbare, pneumatische Schnittstelle aufweist, die mit einem Einlass-Kontakt des zweiten Staubmoduls in engen Kontakt gebracht werden kann, damit ein Saugkanal entsteht und Staub aus dem Staubsammelbehälter des ersten Staubmoduls abgesaugt werden kann. Es ist im Sinne der Erfindung bevorzugt, dass die nicht-arretierbare, pneumatische Schnittstelle dazu eingerichtet ist, einen Saugkanal zwischen dem ersten Staubmodul und dem zweiten Staubmodul herzustellen. Vorzugsweise besteht der Saugkanal nur solange, wie eine Anpresskraft zwischen dem ersten Staubmodul und dem zweiten Staubmodul ausgeübt wird. Es ist im Sinne der Erfindung ganz besonders bevorzugt, dass mit der nicht-arretierbaren, pneumatischen Schnittstelle ein Saugkanal zwischen dem ersten Staubmodul und dem zweiten Staubmodul hergestellt werden kann, über den Staubgut von dem ersten Staubmodul in das zweite Staubmodul abgesaugt werden kann. Mit anderen Worten kann zwischen dem ersten Staubmodul und dem zweiten Staubmodul ein Saugkanal bestehen, um Staubgut zwischen den Staubmodulen auszutauschen bzw. insbesondere von dem ersten Staubmodul in das zweite Staubmodul zu überführen. Dieser Saugkanal kann vorzugsweise durch die Schnittstelle des ersten Staubmoduls verlaufen.

Beispielsweise kann das zweite Staubmodul mit einem Saugschlauch verbunden sein, wobei das erste Ende des Saugschlauchs ein freies Ende des Saugschlauchs darstellt und wobei dieses erste Ende des Saugschlauchs mit einer Werkzeugmaschine, einer Saugdüse oder dergleichen verbunden werden kann. Es ist im Sinne der Erfindung bevorzugt, dass das erste, vordere Ende des Saugschlauchs als Einlass-Kontakt des zweiten Staubmoduls bezeichnet wird. Das zweite Ende des Saugschlauchs kann vorzugsweise über einen Einlass, insbesondere über eine Einlass-Öffnung, mit dem zweiten Staubmodul verbunden werden. Beispielsweise kann das zweite Ende des Saugschlauchs in eine Einlass-Öffnung des (zweiten) Staubsammelbehälters des zweiten Staubmoduls einmünden, so dass mit Hilfe des Saugschlauchs Staubgut in den Staubsammelbehälter des zweiten Staubmoduls eingesaugt werden kann. Es ist im Sinne der Erfindung bevorzugt, dass das erste Ende des Saugschlauchs als vorderes Ende und das zweite Ende des Saugschlauchs als hinteres Ende des Saugschlauchs bezeichnet wird. In diesem Ausführungsbeispiel der Erfindung kann das erste, vordere Ende des Saugschlauchs mit der nicht-arretierbaren pneumatischen Schnittstelle des ersten Staubmodul verbunden werden und Staubgut aus dem ersten Staubmodul in das zweite Staubmodul überführt werden. Dazu kann das Staubgut aus dem (ersten) Staubsammelbehälter des ersten Staubmodul über die pneumatisch aktivierte Schnittstelle des ersten Staubmoduls und den Saugschlauch, der beispielsweise mit dem zweiten Staubmodul verbunden vorliegt, in den Staubsammelbehälter des zweiten Staubmoduls gesaugt werden. Die pneumatische Aktivierung der Schnittstelle kann vorzugsweise dadurch erfolgen, dass das erste Ende bzw. der Einlass-Kontakt des Saugschlauchs in engen Kontakt mit der Schnittstelle gebracht wird, so dass die Schnittstelle durch diesen Kontakt staubgutdurchgängig gemacht wird. Es ist im Sinne der Erfindung bevorzugt, dass eine Anpresskraft von dem Saugschlauch des zweiten Staubmoduls auf das erste Staubmodul bzw. die Schnittstelle ausgeübt wird, wobei die Anpresskraft bewirkt, dass die Schnittstelle geöffnet wird und durchgängig wird, um Staubgut von dem ersten Staubmodul in das zweite Staubmodul «durchzulassen». Durch den engen Kontakt zwischen dem ersten Ende des Saugschlauchs und dem ersten Staubmodul bzw. seiner Schnittstelle kann vorteilhafterweise ein Saugkanal geschaffen werden, über den Staubgut aus dem ersten Staubmodul abgesaugt und in das zweite Staubmodul überführt werden kann. Vorzugsweise kann ein Strom mit staubbeladener Luft durch diesen Saugkanal fließen, wobei mit diesem Luftstrom das Staubgut von dem ersten Staubmodul in das zweite Staubmodul gelangen kann.

Es ist im Sinne der Erfindung bevorzugt, dass eine Dichtkraftrichtung der Schnittstelle einer Richtung der Anpresskraft zwischen den Staubmodulen entspricht. Beispielsweise kann die Schnittstelle des ersten Staubmoduls ein Federelement umfassen, das durch den Einlass-Kontakt des zweiten Staubmodul zusammengedrückt werden kann, um den Weg für die staubbeladene Luft durch die Schnittstelle freizugeben. Wenn der Einlass-Kontakt des zweiten Staubmoduls, der beispielsweise von dem vorderen Ende des Saugschlauches zwischen den Staubmodulen gebildet wird, in engen Kontakt mit der Schnittstelle des ersten Staubmoduls gebracht wird, kann das Federelement zusammengedrückt und ein Ventil in der Schnittstelle freigegeben werden, so dass die staubbeladene Luft durch die Schnittstelle gesaugt werden kann. In dem Kontakt-Zustand, in dem die Schnittstelle durchgängig ist und die Schnittstelle in engen Kontakt mit dem Einlass-Kontakt des zweiten Staubmoduls vorliegt, kann eine virtuelle zentrale Achse durch die Schnittstelle und den Einlass-Kontakt gelegt werden. Es ist im Sinne der Erfindung bevorzugt, dass sowohl die Dichtkraftrichtung der Schnittstelle, als auch die Richtung der Anpresskraft entlang dieser virtuellen zentralen Achse verlaufen. Die Dichtwirkung innerhalb der Schnittstelle wird vorzugsweise dadurch bewirkt, dass der Einlass-Kontakt bei der Herstellung des engen Kontakts zwischen erstem und zweitem Staubmodul in Richtung eines Innenraums des ersten Staubmodul gedrückt wird. Dadurch ergibt sich vorzugsweise, dass die Dichtkraftrichtung der Schnittstelle und die Richtung der Anpresskraft zwischen den Staubmodulen in eine im Wesentlichen entgegengesetzte Richtung weisen, wobei die Dichtkraftrichtung und die Richtung der Anpresskraft zwischen den Staubmodulen vorzugsweise mit der virtuellen zentralen Achse durch die Schnittstelle und/oder durch den Einlass-Kontakt zusammenfällt.

Es ist im Sinne der Erfindung darüber hinaus bevorzugt, dass die Schnittstelle selbst-schließend ausgebildet ist. Das bedeutet im Sinne der Erfindung bevorzugt, dass die Schnittstelle ohne Fremdeinwirkung geschlossen ist und beispielsweise durch einen engen Kontakt oder eine Anpresskraft pneumatisch aktiviert, d.h. geöffnet, werden kann. Dieser enge Kontakt kann vorzugsweise durch einen Kontakt zwischen der Schnittstelle und dem Einlass-Kontakt des zweiten Staubmoduls bzw. seines Saugschlauchs bewirkt werden. Der Einlass-Kontakt kann beispielsweise auch die Anpresskraft auf die Schnittstelle ausüben, wobei die Anpresskraft bewirkt, dass die Schnittstelle geöffnet wird. Es ist im Sinne der Erfindung ganz besonders bevorzugt, dass sich die Schnittstelle selbsttätig verschließt, wenn der Einlass-Kontakt des zweiten Staubmoduls aus dem Bereich der Schnittstelle entfernt wird. Vorzugsweise wird die Schnittstelle nicht selbständig offen, d.h. staubdurchgängig, gehalten, sondern die Schnittstelle schließt sich vorzugsweise selbsttätig, wenn keine Anpresskraft mehr auf die Schnittstelle ausgeübt wird, d.h. wenn kein enger Kontakt zwischen dem ersten und dem zweiten Staubmodul mehr besteht. Es ist im Sinne der Erfindung bevorzugt, dass der Saugkanal zwischen den Staubmodulen ohne eine aktive Fremdeinwirkung nicht aufrechterhalten bzw. offengehalten wird. Insbesondere wird im Kontext der vorliegenden Erfindung keine Vorrichtung, kein Kraftschluss oder keine pneumatisehe Kraft bereitgestellt, die die Schnittstelle oder den Saugkanal offenhält, wenn keine Anpresskraft ausgeübt wird bzw. kein enger Kontakt zwischen den Staubmodulen besteht. Es ist im Sinne der Erfindung bevorzugt, dass die Schnittstelle weder kraft- noch stoffschlüssig arretierbar ist.

Es ist im Sinne der Erfindung bevorzugt, dass die nicht-arretierbare, pneumatische Schnittstelle durch einen engen Kontakt und/oder eine Anpresskraft pneumatisch aktivierbar ist. Es ist im Sinne der Erfindung ganz besonders bevorzugt, dass die nicht-arretierbare, pneumatische Schnittstelle durch den engen Kontakt und/oder die Anpresskraft mechanisch geöffnet werden kann. Der enge Kontakt kann insbesondere zwischen einer Schnittstelle des ersten Staubmoduls und einem Einlass-Kontakt des zweiten Staubmoduls bestehen. Vorzugsweise kann die Anpresskraft von dem Einlass-Kontakt des zweiten Staubmoduls auf die Schnittstelle des ersten Staubmoduls ausgeübt werden. Alternativ oder ergänzend kann die nicht-arretierbare, pneumatische Schnittstelle durch einen Unterdruck des zweiten Staubmoduls pneumatisch geöffnet werden. In dieser Ausgestaltung der Erfindung kann die Schnittstelle von dem Unterdruck, der in dem zweiten Staubmodul erzeugt werden kann, um Staub einzusaugen, geöffnet werden. Dazu kann dasjenige Staubmodul, welches die Schnittstelle umfasst, beispielsweise ein Ventil aufweisen, welches vorgespannt werden kann. Es ist im Sinne der Erfindung bevorzugt, dass das Ventil als Rückschlagventil ausgebildet ist und im Bereich der Schnittstelle desjenigen Staubmoduls vorliegt, das die Schnittstelle aufweist. Es kann aber im Sinne der Erfindung auch bevorzugt sein, dass das Ventil von einem Entenschnabelventil gebildet wird. Die Verwendung von Entenschnabelventilen hat sich im Kontext der vorliegenden Erfindung als vorteilhaft erwiesen, da die Entenschnabelventile zum einen im Wesentlichen reibungsfrei schließen und zum anderen selbsthelfend sind, wobei der Unterdruck der Dichtwirkung der Ventile verstärken kann.

Es ist im Sinne der Erfindung bevorzugt, dass das Rückschlagventil mehrteilig ausgebildet ist. Vorzugsweise kann ein mehrteilig ausgebildetes Rückschlagventil ein Kunststoff-Teil, eine Dichtung und ein Federelement aufweisen. Das Kunststoff-Teil kann beweglich ausgebildet sein und im Betätigungsfall den Weg bzw. den Saugkanal freigeben, damit das Staubgut von dem ersten Staubmodul in das zweite Staubmodul gesaugt werden kann. Die Dichtung kann dazu eingerichtet sein, den Saugkanal abzudichten, wenn die Schnittstelle und/oder das Rückschlagventil verschlossen ist/sind. Das Federelement kann eine Vorspannung erzeugen, die vorzugsweise dazu beitragen kann, dass die Schnittstelle selbst-schließend ausgebildet ist und sich von selbst wieder schließt, wenn keine Anpresskraft von dem Einlass-Kontakt des zweiten Staubmoduls auf das erste Staubmodul übertragen wird, d.h. wenn kein enger Kontakt zwischen den Staubmodulen besteht.

Das Rückschlagventil kann im Sinne der Erfindung bevorzugt auch einteilig ausgebildet sein. In diesem Fall kann das Rückschlagventil ein einteiliges Elastomerbauteil umfassen, das sowohl eine Dichtwirkung und -funktion, als auch eine Federwirkung- und -funktion aufweist. Wenn das Rückschlagventil einteilig ausgebildet ist, kann es vorteilhafterweise die verschiedenen Wirkungen und Funktionen, die das Rückschlagventil erfüllen soll, in einem Teil, nämlich dem Elastomerbauteil, vereinen. Dadurch kann der Aufbau und die Montage der Schnittstelle einfach gehalten werden.

Es hat sich gezeigt, dass die Schnittstelle eine demontage-, staub- und beschädigungsfreie Absaugung des Staubguts aus demjenigen Staubmodul, das die Schnittstelle aufweist, erlaubt. Mit anderen Worten kann der Staubsammelbehälter des Staubmoduls, das die Schnittstelle aufweist, mit Hilfe der Schnittstelle demontage-, staub- und beschädigungsfrei geleert werden, so dass das erste Staubmodul nach seiner Leerung weiter betrieben werden kann, um beispielsweise Staub aus einem Arbeitsbereich einer Werkzeugmaschine abzusaugen. Insbesondere kann mit der Erfindung eine besonders einfache und ungefährliche Entleerung des Staubsammelbehälters desjenigen Staubmoduls, das die Schnittstelle aufweist, gewährleistet werden, bei einer gleichzeitig kostengünstigen, kompakten und leichten Bauform des Staubmoduls.

Es ist im Sinne der Erfindung bevorzugt, dass das erste Staubmodul eine Staubsammelbox an einer Werkzeugmaschine ist. Solche Staubsammelboxen sind im Stand der Technik an sich bekannt und können beispielsweise mit Bohrhämmern verbunden werden, um den Staub abzusaugen, der bei der Arbeit mit der Werkzeugmaschine entsteht. Der Staub entsteht vorzugsweise in einem Arbeitsbereich der Werkzeugmaschine bzw. seines Werkzeugs, wobei ein Saugrohr zwischen der Staubsammelbox und dem Arbeitsbereich der Werkzeugmaschine angeordnet vorliegen kann. Die Staubsammelbox kann beispielsweise ein Saugaggregat aufweisen, mit dem ein Unterdruck erzeugt werden kann, der zum Einsaugen von Staub und Dreck verwendet wird. Die Staubsammelbox kann beispielsweise auf einer Unterseite der Werkzeugmaschine angeordnet vorliegen. Es ist im Sinne der Erfindung bevorzugt, dass die Werkzeugmaschine, an der die Staubsammelbox bei Betrieb der Werkzeugmaschine angeordnet vorliegen kann, kein oder optionaler Bestandteil des vorgeschlagenen Systems ist. Die erforderlichen Bestandteile des Systems sind dahingegen das erste Staubmodul, das zweite Staubmodul und die nicht-arretierbare, pneumatische Schnittstelle, die mindestens an einem der Staubmodule angeordnet vorliegt. Es kann im Sinne der Erfindung auch bevorzugt sein, dass alle Staubmodule des Systems eine nicht-arretierbare, pneumatische Schnittstelle aufweisen. Der Begriff «nicht-arretierbar» bedeutet im Falle dieser Ausgestaltung der Erfindung, dass das erste und das zweite Staubmodul während des Betriebs des ersten Staubmoduls oder der Werkzeugmaschine, mit der das erste Staubmodul verbunden vorliegen kann, nicht miteinander verbunden vorliegen.

Es ist im Sinne der Erfindung bevorzugt, dass ein Montagezustand des Systems einem Arbeitszustand des Systems entspricht. Das bedeutet im Sinne der Erfindung bevorzugt, dass das Staubgut von dem ersten in das zweite Staubmodul insbesondere dann überführt werden kann («Arbeitszustand»), wenn die beiden Staubmodule miteinander verbunden vorliegen («Montagezustand»). Der Begriff «Arbeitszustand» ist vorzugsweise unabhängig von einem Arbeitszustand der Werkzeugmaschine.

Das zweite Staubmodul kann beispielsweise von einem Industrie- oder Baustellenstaubsauger gebildet werden, der im Sinne der Erfindung bevorzugt als «separater Staubsauger» bezeichnet wird. Industrie- oder Baustellenstaubsauger sind an sich ebenfalls bekannt und weisen üblicherweise ein Saugaggregat, wie eine Turbine, auf, um einen Unterdruck und dadurch einen Saugstrom zu erzeugen. Das Saugaggregat kann von einem Motor des Industrie- oder Baustellenstaubsaugers angetrieben werden. Mit dem Saugstrom kann Staubs oder dergleichen in einen Staubsammelbehälter eingesaugt werden. Dazu kann der Industrie- oder Baustellenstaubsauger einen Saugschlauch umfassen, der mit seinem ersten, vorderen Ende mit einer Werkzeugmaschine oder eine Saugdüse verbunden werden kann und mit seinem zweiten, hinteren Ende mit dem Industrie- oder Baustellenstaubsauger, seinem Saugerkopf oder seinem Staubsammelbehälter. Darüber hinaus kann der Industrie- oder Baustellenstaubsauger Filter zum Reinigen des Saugstroms und zum Schutz des Motors und/oder des Saugaggregats des Industrie- oder Baustellenstaubsaugers aufweisen. Vorzugsweise weist der Staubsammelbehälter des zweiten Staubmoduls («zweiter Staubsammelbehälter») ein größeres Fassungsvermögen als der Staubsammelbehälter des ersten Staubmoduls («erster Staubsammelbehälter») auf. Dadurch kann das Entleeren des ersten Staubsammelbehälters bzw. das Absaugen von Staubgut aus dem ersten Staubmodul wiederholt werden, ohne dass der zweite Staubsammelbehälter geleert werden muss. Mithin kann das zweite Staubmodul als großer Sammelbehälter für Staub auf einer Baustelle verwendet werden. Es kann im Sinne der Erfindung auch bevorzugt sein, dass auf einer Baustelle eine Vielzahl von Werkzeugmaschinen mit einer Vielzahl von ersten Staubmodulen vorkommen. Die mehreren ersten Staubmodule können jeweils eine nicht-arretierbare, pneumatische Schnittstelle aufweisen und in den Staubsammelbehälter des zweiten Staubmoduls entleert werden. Beispielsweise kann das erste Staubmodul auch als Staubsauger-Roboter ausgebildet sein, so dass das zweite Staubmodul als Basisstation für die Aufnahme von Staubgut dienen kann. Es kann im Sinne der Erfindung auch bevorzugt sein, dass das vorgeschlagene System neben einem zweitem Staubmodul ein erstes Staubmodul umfasst, das als Staubsammelbox für eine Werkzeugmaschine ausgebildet ist, sowie ein weiteres erstes Staubmodul, wobei das weitere erste Staubmodul als Staubsauger-Roboter ausgebildet ist. Die ersten Staubmodule umfassen jeweils einen ersten Staubsammelbehälter mit einem nicht-arretierbaren, pneumatischen Schnittstelle, wobei die Staubsammelbehälter der ersten Staubmodul über die Schnittstelle besonders einfach, staubfrei und unkompliziert in das zweite Staubmodul entleert werden können. Mithin kann mit der Erfindung ein System zur besonders staubarmen bzw. staubfreien Entsorgung von Staub oder Staubgut aus kleineren, vorzugsweise mobilen ersten Staubmodulen bereitgestellt werden, wobei die Entleerung in ein zweites bevorzugt größeres Staubmodul erfolgt.

In einem Ausführungsbeispiel kann die Erfindung ein System aus mindestens zwei Staubmodulen sein, wobei die Staubmodule jeweils Sammelbehälter aufweisen, wobei mindestens ein erstes Staubmodul eine am Sammelbehälter befindliche, nicht-arretierbare pneumatische Schnittstelle als Einlass-Schnittstelle für ein weiteres Staubmodul aufweist. Der Sammelbehälter kann vorzugsweise zwischen der Einlass-Schnittstelle und einem Filter des Staubmoduls angeordnet vorliegen. Es ist im Sinne der Erfindung bevorzugt, dass die Filter der "nachfolgenden" Staubmodule jeweils zunehmende Partikelrückhaltevermögen aufweisen. Mit anderen Worten ist der Filter des zweiten Staubmoduls vorzugsweise dazu eingerichtet, mehr Staub aufzunehmen als der Filter des ersten Staubmoduls. Die Staubmodule können im Sinne der Erfindung bevorzugt auch als Staubsaugermodule bezeichnet werden.

Die vorliegende Erfindung besteht insbesondere darin, dass mindestens eines der beiden Staubmodule, beispielsweise das erste Staubmodul, eine nicht-arretierbare pneumatische Schnittstelle aufweist, mit der der Staubsammelbehälter desjenigen Staubmoduls, das die Schnittstelle aufweist, abgesaugt werden kann. Der Begriff «Absaugen» bedeutet in diesem Kontext bevorzugt, dass der Staubsammelbehälter desjenigen Staubmoduls, das die Schnittstelle aufweist, mit Hilfe der Schnittstelle entleert werden kann, indem das Staubgut, das sich in dem Staubsammelbehälter befindet, über die pneumatisch aktivierte Schnittstelle in den Staubsammelbehälter des anderen Staubmoduls, das beispielsweise keine nicht-arretierbare pneumatische Schnittstelle aufweist, abgesaugt bzw. überführt werden kann. Dadurch findet vorzugsweise ein Umfüllen oder eine Umladung des Staubguts statt, und zwar vorzugsweise von dem kleineren Staubsammelbehälter des ersten Staubmoduls, welches in diesem Ausführungsbeispiel die Schnittstelle aufweist, in den größeren Staubsammelbehälter des zweiten Staubmoduls.

Es ist im Sinne der Erfindung ganz besonders bevorzugt, dass das vorgeschlagene System eine Staubsammelbox für eine Werkzeugmaschine als erstes Staubmodul aufweist und einen Industrie- oder Baustellenstaubsauger als zweites Staubmodul, wobei zumindest die Staubsammelbox eine nicht-arretierbare pneumatische Schnittstelle aufweist, damit Staubgut aus dem Staubsammelbehälter der Staubsammelbox über die Schnittstelle in den Staubsammelbehälter des Industrie- oder Baustellenstaubsaugers abgesaugt werden kann. In einem Ausführungsbeispiel der Erfindung ist das erste Staubmodul des vorgeschlagenen Systems eine Staubsammelbox für eine Werkzeugmaschine und das zweite Staubmodul ein separater Staubsauger. Dabei kann zumindest das erste Staubmodul die nicht-arretierbare, pneumatische Schnittstelle aufweisen, wobei die nicht-arretierbare, pneumatische Schnittstelle in dem Staubsammelbehälter des ersten Staubmoduls vorliegt. Es ist im Sinne der Erfindung bevorzugt, dass dasjenige Staubmodul, das die nicht-arretierbare, pneumatische Schnittstelle aufweist, über die Schnittstelle entleerbar ist, ohne demontiert werden zu müssen. Bei dem Staubmodul, das die nicht-arretierbare, pneumatische Schnittstelle aufweist, handelt es sich vorzugsweise um das erste Staubmodul, das mit Hilfe der Erfindung besonders einfach und staubarm oder staubfrei entleert werden kann. Wenn beispielsweise das erste Staubmodul die nicht-arretierbare, pneumatische Schnittstelle aufweist, bedeutet dieses Merkmal im Sinne der Erfindung bevorzugt, dass das erste Staubmodul nicht auseinandergebaut werden muss, um entleert zu werden. Insbesondere ist es nicht erforderlich, den Staubsammelbehälter oder eine eventuell vorhandene Filtereinheit von dem Staubmodul abzunehmen. Vielmehr kann das erste Staubmodul durch einen engen Kontakt mit dem zweiten Staubmodul bzw. durch Ausübung einer Anpresskraft von dem zweiten Staubmodul oder einer seiner Komponenten auf das erste Staubmodul geleert werden. Denn durch den engen Kontakt bzw. die Anpresskraft kann die Schnittstelle zwischen den Staubmodulen geöffnet werden, so dass ein Saugkanal zwischen den Staubmodul entsteht. Durch diesen Saugkanal kann dann Staubgut von dem ersten Staubmodul in das zweite Staubmodul gelangen, so dass das erste Staubmodul bzw. sein Staubsammelbehälter geleert oder abgesaugt werden kann. Auf diese Weise kann mit der Erfindung eine sehr zeitsparende und unkomplizierte Möglichkeit bereitgestellt werden, ein Staubmodul, wie beispielsweise eine Staubsammelbox für eine Werkzeugmaschine, zu entleeren. Wenn das erste Staubmodul von einer Staubsammelbox für eine Werkzeugmaschine gebildet wird, ist es im Kontext der Erfindung insbesondere nicht erforderlich, die Staubsammelbox von der Werkzeugmaschine abzunehmen, wenn der Staubsammelbehälter der Staubsammelbox ausgeleert werden soll. Vielmehr kann der Staubsammelbehälter vorteilhafterweise an der Staubsammelbox verbleiben, so dass der Betrieb der Werkzeugmaschine besonders zügig fortgesetzt bzw. wieder aufgenommen werden kann.

Es ist im Sinne der Erfindung bevorzugt, dass die Staubsammelbox sowohl bei Betrieb der Werkzeugmaschine entleert werden kann, als auch in einem ausgeschalteten Zustand der Werkzeugmaschine. Die Entleerung der Staubsammelbox erfolgt vorzugsweise in einem ausgeschalteten Zustand der Staubsammelbox, da in diesem Zustand die Entleerung mit einer Filterabreinigung kombiniert werden kann. Ein solches Vorgehen bietet sich an, da es im ausgeschalteten Zustand der Staubsammelbox zu einer Rückspülung kommen kann, bei der der Filter von einem Luftstrom durchström wird, wobei der Luftstrom dazu eingerichtet ist, einen etwaigen Filterkuchen von dem Filter zu lösen. Dadurch kann die Arbeit mit der Werkzeugmaschine weiter vereinfacht und effizienter gestaltet werden.

Es ist im Sinne der Erfindung bevorzugt, dass die nicht-arretierbare, pneumatische Schnittstelle selbst-schließend ausgebildet ist. Das kann - wie oben beschrieben - beispielsweise durch die Vorsehung eines bevorzugt vorspannbaren Rückschlagventils ermöglicht werden. Es ist im Sinne der Erfindung ganz besonders bevorzugt, dass die nicht-arretierbare, pneumatische Schnittstelle ein Ventil zur Freigabe oder zum Verschließen des Saugkanals umfasst. Der Begriff «selbst-schließend» bedeutet im Sinne der Erfindung bevorzugt, dass die Schnittstelle einen Durchgang von Staub und staubbeladender Luft durch die Schnittstelle erlaubt, wenn ein enger Kontakt zwischen dem Einlass-Kontakt des zweiten Staubmoduls und der Schnittstelle des ersten Staubmoduls besteht, wobei sich die Schnittstelle quasi automatisch wieder schließt, wenn der Einlass-Kontakt des zweiten Staubmoduls aus dem Schnittstellenbereich des ersten Staubmoduls entfernt und der enge Kontakt zwischen den Staubmodulen dadurch beendet wird. Es ist im Sinne der Erfindung bevorzugt, dass das Ventil bzw. sein Federelement im normalen Absaugbetrieb der Staubsammelbox vorgespannt vorliegt und bei Entleerung der Staubsammelbox durch den engen Kontakt zwischen den Staubmodulen gegen die Vorspannung geöffnet wird.

Beispielsweise kann der Einlass-Kontakt des zweiten Staubmoduls von einem vorderen Ende eines Saugschlauchs gebildet werden, welches in eine Öffnung der Schnittstelle des ersten Staubmoduls eingeführt werden kann. Dabei kann eine Anpresskraft auf die Schnittstelle ausgeübt werden, mit der das Ventil gegen die Vorspannung geöffnet werden. Die Schnittstelle wird dadurch geöffnet, während das Ventil im gespannten Zustand vorliegt, so dass Staub und/oder staubbeladene Luft in diesem geöffneten Zustand («Arbeitszustand der Schnittstelle») durch die Schnittstelle hindurch von dem ersten in das zweite Staubmodul gelangen kann. Mit anderen Worten kann die Schnittstelle dadurch geöffnet werden, dass das Ventil von einer vorgespannten oder Ausgangsposition in einen gespannten Zustand überführt wird, wobei der gespannte Zustand des Ventils vorzugsweise dem Arbeits- oder geöffneten Zustand der Schnittstelle entspricht. Durch Herausziehen des Saugschlauchs aus der Öffnung der Schnittstelle kann der enge Kontakt zwischen den Staubmodulen und der Arbeitszustand beendet werden, indem das Ventil durch das Fehlen des Einlass-Kontakts entspannt wird und von dem gespannten Zustand in seine Ausgangs- oder vorgespannte Position zurückschnellt.

Es ist im Sinne der Erfindung bevorzugt, dass die Vorspannung des Ventils unterschiedlichen Funktionen haben kann. Zum einen wird die Vorspannung vorzugsweise zum Schließen des Ventils eingesetzt. Dabei ist es im Sinne der Erfindung bevorzugt, dass das Ventil vom geöffneten Zustand im Wesentlichen vollständig in den geschlossenen Zustand zurückgeführt wird. Durch die Vorspannung und um das Ventil vorzugsweise im Wesentlichen vollständig zu schlie-βen, ist es erforderlich, kann vorteilhafterweise mit der Erfindung eine Reibung überwunden werden, wobei die Überwindung der Reibung eine Kraft erfordert, die vorzugsweise größer als null ist. Darüber hinaus kann mit der Vorspannung ein unerwünschtes selbsttätiges Öffnen des Ventils vermieden werden. Denn aufgrund des Unterdrucks in der Staubbox wirkt eine öffnende Kraft auf das Ventil, wobei die Vorspannung des Ventils dem Unterdruck entgegenwirkt.

In einem zweiten Aspekt betrifft die Erfindung eine pneumatische Schnittstelle zwischen einem ersten Staubmodul und einem zweiten Staubmodul, wobei die Schnittstelle nicht-arretierbar ausgebildet ist. Die für das System eingeführten Begriffe, Definitionen und technischen Vorteile gelten vorzugsweise für die pneumatische Schnittstelle analog. Die pneumatische Schnittstelle kann vorzugsweise selbst-schließend ausgebildet sein und dazu eingerichtet sein, einen Saugkanal zwischen dem ersten Staubmodul und dem zweiten Staubmodul herzustellen. Mit anderen Worten kann mit der nicht-arretierbaren, pneumatischen Schnittstelle ein Saugkanal zwischen dem ersten Staubmodul und dem zweiten Staubmodul hergestellt werden, über den Staubgut von dem ersten Staubmodul in das zweite Staubmodul abgesaugt werden kann. Vorzugsweise kann die nicht-arretierbare, pneumatische Schnittstelle ein Rückschlagventil zur Freigabe oder zum Verschließen des Saugkanals umfassen, wobei das Rückschlagventil einteilig oder mehrteilig ausgebildet sein kann. Es ist im Sinne der Erfindung bevorzugt, dass die nicht-arretierbare, pneumatische Schnittstelle durch einen engen Kontakt und/oder eine Anpresskraft pneumatisch aktiviert werden kann, wobei die nicht-arretierbare, pneumatische Schnittstelle in dem Staubsammelbehälter des ersten Staubmoduls des vorgeschlagenen Systems vorliegt.

In einem weiteren Aspekt betrifft die Erfindung ein Verfahren zum Absaugen von Staubgut aus einem ersten Staubmodul, wobei das erste Staubmodul Bestandteil des vorgeschlagenen Systems ist. Die für das System und die pneumatische Schnittstelle eingeführten Begriffe, Definitionen und technischen Vorteile gelten vorzugsweise für das Absaugverfahren analog. Das Verfahren zum Absaugen von Staubgut ist durch folgende Verfahrensschritte gekennzeichnet:
a) Bereitstellung eines ersten Staubmoduls, wobei mindestens das erste Staubmodul eine nicht-arretierbare, pneumatische Schnittstelle zur Verbindung des ersten Staubmoduls mit einem zweiten Staubmodul aufweist,
b) Verbinden des ersten Staubmoduls mit dem zweiten Staubmodul über die Schnittstelle,
c) Absaugen von Staubgut aus dem ersten Staubmodul mit Hilfe der Schnittstelle.

Es ist im Sinne der Erfindung ganz besonders bevorzugt, dass das Staubgut über die Schnittstelle von dem ersten Staubmodul in das zweite Staubmodul abgesaugt wird, wobei die Schnittstelle durch die Ausübung einer Anpresskraft und/oder durch einen engen Kontakt zwischen der Schnittstelle des einen Staubmoduls auf der einen Seite und eines Einlass-Kontakts des anderen Staubmoduls auf der anderen Seite geöffnet werden kann. Wenn die Schnittstelle geöffnet ist, kann ein Saugkanal zwischen dem ersten Staubmodul und dem zweiten Staubmodul gebildet werden, über den Staubgut von dem Staubsammelbehälter des ersten Staubmodul in den Staubsammelbehälter des zweiten Staubmoduls gesaugt werden kann. Dazu kann vorzugsweise ein Druckunterschied zwischen den Staubmodulen bestehen. Es ist im Sinne der Erfindung ganz besonders bevorzugt, wenn bei geöffneter Schnittstelle in dem zweiten Staubmodul ein stärkerer Unterdruck vorliegt als in dem ersten Staubmodul. Durch diesen Druckunterschied kann das Staubgut aus dem Staubsammelbehälter des ersten Staubmoduls abgesaugt und in den Staubsammelbehälter des zweiten Staubmoduls eingesaugt werden. Die Formulierung «ein stärkerer Unterdruck» bedeutet im Sinne der Erfindung bevorzugt, dass in absoluten Zahlen in dem zweiten Staubmodul ein niedrigerer Druck vorliegt als in dem ersten Staubmodul. Dies ergibt sich daraus, dass der Unterdruck in negativen Zahlen angegeben wird, so dass ein «stärkerer Unterdruck» mit einem größeren Abstand von einem Druck p = 0 bar einhergeht. Beispielsweise kann der Unterdruck in dem zweiten Staubmodul bei - 100 Millibar (mbar) liegen, während der Unterdruck in dem ersten Staubmodul bei beispielsweise - 50 mbar liegen kann. Wenn die Schnittstelle bei solchen Druckverhältnisse geöffnet, d.h. pneumatisch aktiviert, wird, wird das Staubgut aufgrund des Druckunterschieds von dem ersten in das zweite Staubmodul gesaugt. Mit anderen Worten bildet sich bei diesen Druckverhältnissen der Saugkanal dergestalt aus, dass ein Druckausgleichsstrom von dem ersten in das zweite Staubmodul entsteht, mit dem das Staubgut von dem ersten in das zweite Staubmodul transportiert werden kann.

Es ist im Sinne der Erfindung bevorzugt, dass das erste Staubmodul und das zweite Staubmodul Filter aufweisen, mit denen der Luft- bzw. Saugstrom gereinigt werden kann. Mit den Filtem kann die Luft des Saugstroms von Staub und der gleichen gereinigt werden, so dass nur gereinigte und/oder gefilterte Luft durch das Saugaggregat strömt. Dadurch kann vorteilhafterweise die Lebenszeit des Saugaggregats verlängert werden, da das Saugaggregat und seine Komponenten durch die Vorsehung der Filter wirksam vor Verschmutzungen und Beschädigungen bewahrt werden. Es ist im Sinne der Erfindung ganz besonders bevorzugt, dass der Filter des zweiten Staubmoduls («zweiter Filter») ein höheres Staubrückhaltevermögen aufweist als der Filter des ersten Staubmoduls («erster Filter»), Das bedeutet im Sinne der Erfindung bevorzugt, dass der staubbeladene Luftstrom insbesondere in dem zweiten Staubmodul besonders gut von Staub und Staubpartikel gereinigt werden kann.

Es ist im Sinne der Erfindung bevorzugt, dass das zweite Staubmodul einen Einlass-Kontakt aufweist, der mit der nicht-arretierbaren, pneumatischen Schnittstelle des ersten Staubmoduls in engen Kontakt bringbar ist, so dass ein Saugkanal zwischen dem ersten Staubmodul und dem zweiten Staubmodul gebildet wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung des Systems
- Fig. 2: Schnittdarstellung einer bevorzugten Ausgestaltung des ersten Saugmoduls
- Fig. 3: Schnittdarstellung einer bevorzugten Ausgestaltung der pneumatischen, nichtarretierbaren Schnittstelle
- Fig. 4: Darstellung einer bevorzugten Ausgestaltung des Systems mit einem ersten und einem zweiten Saugmodul
- Fig. 5: Darstellung einer bevorzugten Ausgestaltung des Systems mit einem ersten, einem zweiten und einem n-ten Saugmodul

### Ausführungsbeispiele und Figurenbeschreibung:

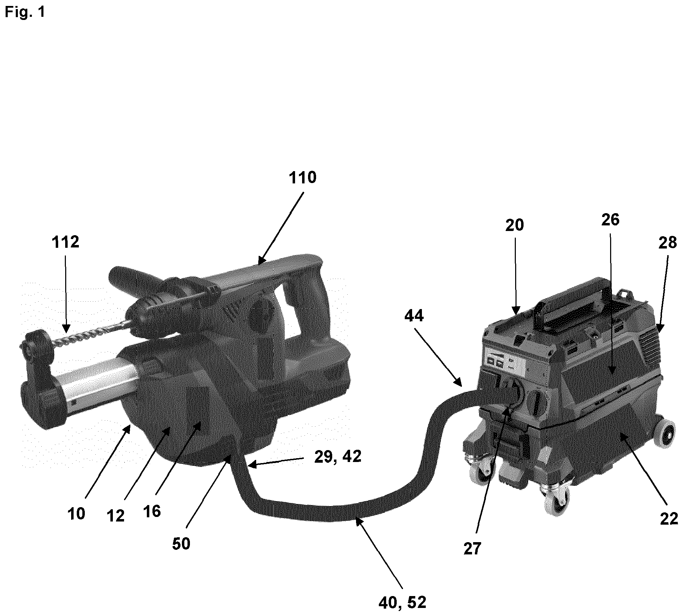

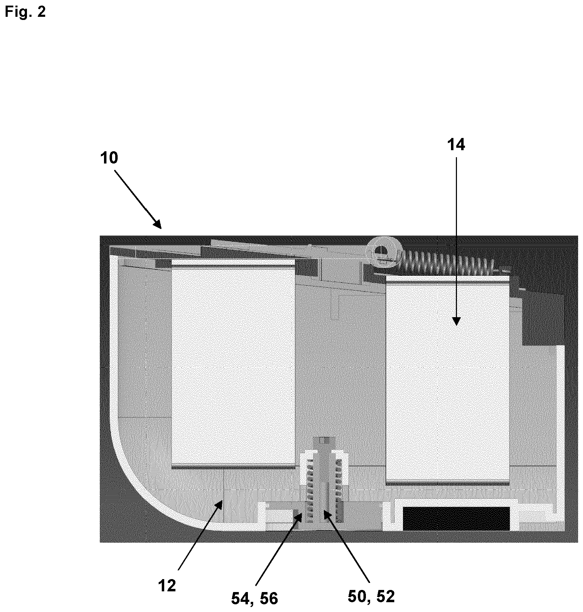

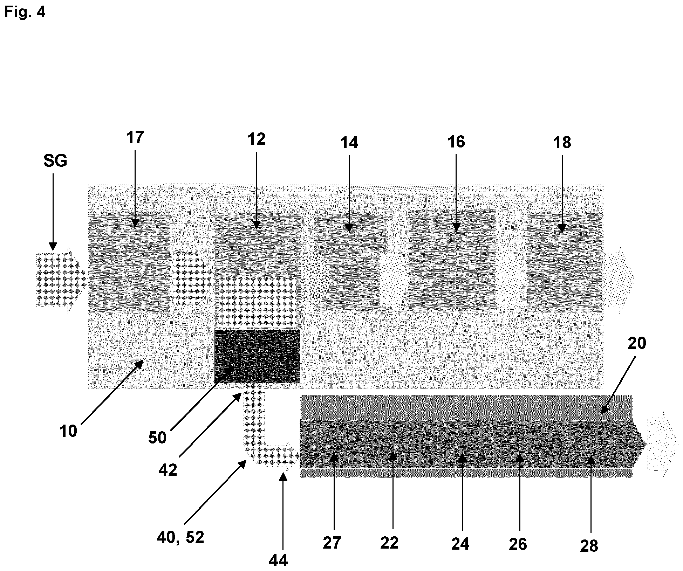

Figur 1 zeigt eine bevorzugte Ausgestaltung des Systems 100. Dargestellt ist eine Werkzeugmaschine 110 mit einem Werkzeug 112. Bei der Werkzeugmaschine 110 kann es sich beispielsweise um einen Bohr- oder Meißelhammer handeln, wobei mit dem Werkzeug 112 der Werkzeugmaschine 110 ein Untergrund bearbeitet werden kann. Bei der Arbeit mit der Werkzeugmaschine 110 kann in einem Arbeitsbereich, also dort, wo das Werkzeug 112 der Werkzeugmaschine 110 den Untergrund bearbeitet, Staub erzeugt werden. Der Staub kann auch größere Partikel umfassen, wobei die Mischung aus Staub und Partikeln im Sinne der Erfindung als Staubgut SG bezeichnet werden. Das Staubgut SG kann von einem ersten Staubmodul 10 aufgesaugt werden. Das erste Staubmodul 10 kann - wie beispielhaft in Figur 1 dargestellt - auf einer Unterseite der Werkzeugmaschine 110 angeordnet vorliegen und insbesondere mechanisch mit der Werkzeugmaschine 110 verbunden sein. Das erste Staubmodul 10 weist einen Staubsammelbehälter 12 auf, der im Sinne der Erfindung bevorzugt als «erster Staubsammelbehälter» bezeichnet wird. Das Staubgut SG kann über ein Saugrohr von dem Arbeitsbereich der Werkzeugmaschine 110 in das erste Staubmodul 10 eingesaugt und in dem Staubsammelbehälter 12 des ersten Staubmoduls 10 gesammelt werden. Das Einsaugen wird von einem Unterdruck bewirkt, der von einem Saugaggregat 16 (siehe Fig. 4) des ersten Staubmoduls 10 erzeugt werden kann. Darüber hinaus kann das erste Staubmodul 10 einen Filter 14 (siehe Fig. 2ff) oder eine Filtereinheit aufweisen, mit dem die staubbeladene Luft gefiltert werden kann, bevor sie auf das Saugaggregat 16 des ersten Staubmoduls 10 trifft. Zum Entleeren des Staubbehälters 12 kann das Staubmodul 10 insbesondere bei konventionellen Systemen von der Werkzeugmaschine 110 getrennt werden; mithin ist das Staubmodul 10 lösbar mit der Werkzeugmaschine 110 verbindbar.

Gegenstand der vorliegenden Erfindung ist es, dass ein Staubmodul 10 eine pneumatische, nicht-arretierbare Schnittstelle 50 aufweist, über die der Staubsammelbehälter 12 des ersten Staubmoduls 10 entleert werden kann. Die Schnittstelle 50 liegt vorzugsweise in dem Sammelbehälter 12 des ersten Staubmoduls 10 vor. Dazu kann ein Einlass-Kontakt 29 eines zweiten Staubmoduls 20 in engen Kontakt mit der Schnittstelle 50 gebracht werden. Bei dem zweiten Staubmodul 20 kann es sich um einen Industrie- oder Baustellenstaubsauger handeln. Das zweite Staubmodul 20 kann ebenfalls ein Saugaggregat 26 aufweisen, mit dem ein Unterdruck erzeugt werden kann. Staub kann mit Hilfe des Unterdrucks durch einen Saugschlauch 40 eingesaugt werden, wobei der Saugschlauch 40 ein vorderes, erstes Ende 42 und ein hinteres, zweites Ende 44 aufweist. Mit dem hinteren Ende 44 kann der Saugschlauch 40 mit dem zweiten Staubmodul 20 verbunden werden, an das erste Ende 42 kann eine Saugdüse (nicht dargestellt) oder eine Werkzeugmaschine 110 befestigt werden. Das vordere Ende 42 des Saugschlauchs 40 kann auch als Einlass-Kontakt 29 dienen und in eine Öffnung der Schnittstelle 50 des ersten Staubmoduls 10 eingeführt werden. Das Einführen des vorderen Saugschlauchs 42 des Saugschlauchs 40 in die Schnittstelle 50 wird im Sinne der Erfindung bevorzugt als Herstellung eines engen Kontakts zwischen den Staubmodulen 10, 20 bezeichnet werden. Nachdem der Saugschlauch 40 vorzugsweise mit dem zweiten Staubmodul 20 verbunden vorliegt, wird das vordere Ende 42 des Saugschlauchs 40 bevorzugt auch als «Einlass-Kontakt 29 des zweiten Staubmoduls 20» bezeichnet. Es kann allerdings im Sinne der Erfindung ebenso gut bevorzugt sein, dass ein Einlass-Kontakt 29 unmittelbar bzw. direkt an dem zweiten Staubmodul 20 angeordnet vorliegt. Dabei kann ein solcher Einlass-Kontakt 29, der direkt am zweiten Staubmodul 20 angeordnet vorliegt, beispielsweise von einem hervorstehenden Hohlzylinder gebildet werden, der in eine Öffnung der Schnittstelle 50 eingeführt werden kann, um die Schnittstelle 50 zu öffnen und staubdurchgängig zu machen. Die Formulierung «staubdurchgängig» bedeutet im Sinne der Erfindung, dass Staub, Staubgut SG und/oder staubbeladene Luft die Schnittstelle 50 passieren und auf diese Weise von dem ersten Staubmodul 10 in das zweite Staubmodul 20 gelangen kann.

Mit dem Saugschlauch 40 kann insbesondere eine Anpresskraft auf die Schnittstelle 50 ausgeübt werden, mit der die Schnittstelle 50 geöffnet, d.h. durchgängig für staubbeladene Luft, gemacht wird. Mit anderen Worten kann staubbeladene Luft oder Staubgut SG durch die geöffnete Schnittstelle 50 aus dem Sammelbehälter 12 des ersten Staubmoduls 10 abgesaugt werden. Dadurch kann der Sammelbehälter 12 des ersten Staubmoduls 10 besonders einfach und unaufwändig entleert werden. Insbesondere ist es dazu nicht erforderlich, den Staubsammelbehälter 12 oder das gesamte erste Staubmodul 10 von der Werkzeugmaschine 110 zu demontieren. Vielmehr können der Staubsammelbehälter 12 und das erste Staubmodul 10 an der Werkzeugmaschine 110 verbleiben, wenn der Staubsammelbehälter 12 geleert wird. Wenn die Schnittstelle 50 zwischen den Staubmodulen 10, 20 geöffnet ist, kann das Staubgut SG aus dem ersten Staubmodul 10 in das zweite Staubmodul 20 überführt werden. Durch das Öffnen der Schnittstelle 50 kann vorteilhafterweise ein Saugkanal 52 zwischen den Staubmodulen 10, 20 gebildet werden, um Staubgut SG von dem einen Staubmodul 10 in das andere Staubmodul 20 zu überführen. Der Saugkanal 52 verläuft vorzugsweise durch die Schnittstelle 50 und den Saugschlauch 40 und verbindet vorübergehend - während die Schnittstelle 50 geöffnet ist - die Staubsammelbehälter 12, 22 der Staubmodule 10, 20 miteinander.

Das zweite Staubmodul 20 weist einen Filter 24 auf, mit dem die staubbeladene Luft gereinigt werden kann, bevor sie zum Saugaggregat 26 gelangt und anschließend über die Auslass-Öffnung 28 hinausgeblasen wird. Darüber hinaus weist das zweite Staubmodul 20 eine Einlass-Öffnung 27 und eine Auslass-Öffnung 28 auf, wobei die Einlass-Öffnung 27 und die Auslass-Öffnung 28 des zweiten Staubmoduls 20 als «zweite Einlass-Öffnung» und «zweite Auslass-Öffnung» bezeichnet werden. Durch die Einlass-Öffnung 27 kann Luft in das zweite Staubmodul 20 eingesaugt werden, wobei an die Einlass-Öffnung 27 der Saugschlauch 40 mit seinem hinteren Ende 44 angeschlossen werden kann. Aus der Auslass-Öffnung 28 kann die gefilterte Luft aus dem zweiten Staubmodul 20 herausgeblasen werden. Das zweite Staubmodul 20 weist fernen einen Staubsammelbehälter 22 auf, der im Sinne der Erfindung als «zweiter Staubsammelbehälter» bezeichnet werden kann. In dem zweiten Staubsammelbehälter 22 kann Staubgut SG gesammelt werden. Insbesondere kann in dem Staubsammelbehälter 22 des zweiten Staubmoduls 20 derjenige Staub gesammelt werden, der über die Schnittstelle 50 und den Saugschlauch 40 aus dem ersten Staubmodul 10 abgesaugt wird.

Figur 2 zeigt eine Schnittdarstellung einer bevorzugten Ausgestaltung des ersten Saugmoduls 10. Insbesondere zeigt Fig. 2 den Staubsammelbehälter 12, sowie den Filter 14 und die Schnittstelle 50. Wenn die Schnittstelle 50 geöffnet ist, kann Staubgut SG von dem ersten Staubmodul 10 in das zweite Staubmodul 20 gelangen, wobei das Staubgut SG dabei insbesondere den Saugkanal 52 passiert, der von der Schnittstellte 50 freigegeben wird. Das Einsaugen des Staubguts SG aus dem ersten Staubmodul 10 kann insbesondere dadurch erleichtert werden, dass in dem zweiten Staubmodul 20 ein stärkerer Unterdruck, d.h. ein niedrigerer Absolutdruck, herrscht als in dem ersten Staubmodul 10. Dadurch ergibt sich bei geöffneter Schnittstelle 50 eine Ausgleichsströmung, mit der das Staubgut SG aus dem Staubsammelbehälter 12 des ersten Staubmoduls 10 herausgesaugt werden kann.

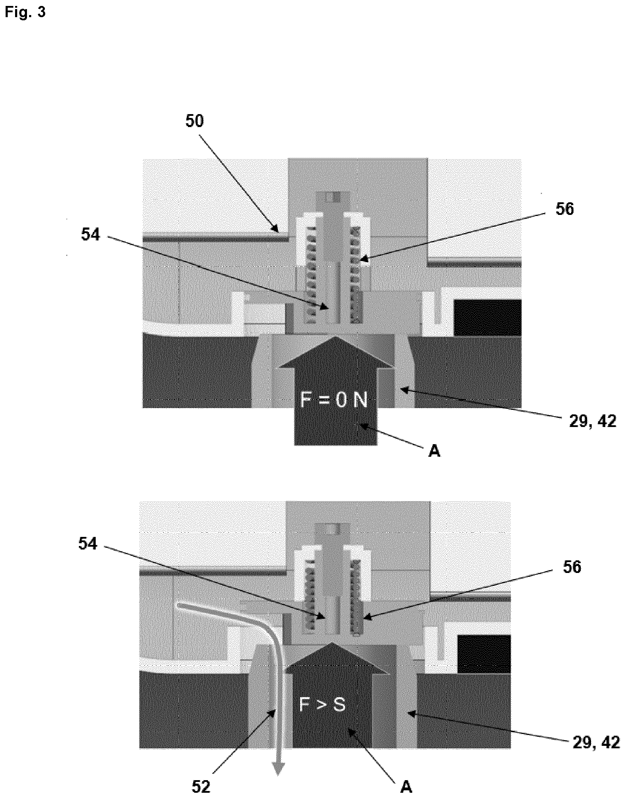

Die Schnittstelle 50 kann ein Ventil 54 und ein Federelement 56, sowie Dichtelemente (nicht dargestellt) umfassen. Das Ventil 54 kann beispielsweise als Rückschlagventil ausgebildet sein. Wenn der Einlass-Kontakt 29 des zweiten Staubmoduls 20 in eine Öffnung der Schnittstelle 50 eingeführt oder hineingedrückt wird, öffnet sich das Rückschlagventil 54, so dass Staub, Staubgut SG und/oder staubbeladene Luft durch die Schnittstelle 50 abgesaugt werden kann. Das Hineindrücken des Einlass-Kontakts 29 in die Schnittstelle 50 wird im Sinne der Erfindung bevorzugt als Herstellung eines «engen Kontakts» zwischen dem Einlass-Kontakt 29 des zweiten Staubmoduls 20 und der Schnittstelle 50 des ersten Staubmoduls 10 bezeichnet. Der Einlass-Kontakt 29 des zweiten Staubmoduls 20 übt insbesondere eine Anpresskraft F (siehe Fig. 3) auf das Rückschlagventil 54 aus, so dass das Ventil 54 in Richtung eines Innenraums des Staubsammelbehälters 12 des ersten Staubmoduls 10 verschoben wird. Die Verschiebung des Ventils 54 bewirkt die Ausbildung des Saugkanals 52, durch den das Staubgut SG von dem ersten Staubmodul 10 in das zweite Staubmodul 20 gelangen kann. Die Schnittstelle 50 kann ferner ein Federelement 56 aufweisen, mit dem das Ventil 54 wieder geschlossen wird, wenn der Einlass-Kontakt 29 aus dem Bereich der Schnittstelle 50 entfernt wird bzw. wenn kein enger Kontakt mehr besteht zwischen dem Einlass-Kontakt 29 des zweiten Staubmoduls 20 und der Schnittstelle 50 des ersten Staubmoduls 10.

Figur 3 zeigt eine Schnittdarstellung einer bevorzugten Ausgestaltung der pneumatischen, nicht-arretierbare Schnittstelle 50. In der oberen Hälfte von Fig. 3 ist die Schnittstelle 50 im geschlossenen Zustand dargestellt, während die Schnittstelle 50 in der unteren Hälfte von Fig. 3 im geöffneten Zustand dargestellt ist. Der nach oben weisende Pfeil stellt die Anpresskraft F und ihre Richtung dar. Der Einlass-Kontakt 29 des zweiten Staubmoduls 20 kann, um die Schnittstelle 50 zu öffnen, in eine Öffnung des ersten Staubmoduls 10 eingeführt werden, wobei diese Öffnung des ersten Staubmoduls 10 vorzugsweise auch als Öffnung der Schnittstelle 50 bezeichnet wird. Die Anpresskraft F beträgt bei geschlossener Schnittstelle 50 0 Newton (N), d.h. der Einlass-Kontakt 29 des zweiten Staubmoduls 20 übt im Wesentlichen keine Kraft auf die Schnittstelle 50 bzw. auf das in der Schnittstelle 50 enthaltene Ventil 54 aus. Dadurch befindet sich das Federelement 56 des Ventils 54 vorzugsweise in einem vorgespannten Zustand, in dem das Federelement 56 des Ventils 54 mit einer Vorspannkraft S vorgespannt ist. Das Öffnen der Schnittstelle 50 erfolgt vorzugsweise dadurch, dass der Einlass-Kontakt 29 des zweiten Staubmoduls 20 in engen Kontakt mit der Schnittstelle 50 bzw. mit dem Ventil 54 in der Schnittstelle 50 gebracht wird. Dadurch wird eine Anpresskraft F auf die Schnittstelle 50 bzw. das Ventil 54 ausgeübt und das Ventil 54 geöffnet.

Insbesondere kann das Ventil 54 durch den Einlass-Kontakt 29 in eine Raumrichtung nach oben, d.h. im Sinne der Erfindung bevorzugt in Richtung eines Innenraums des Staubsammelbehälters 12 des ersten Staubmoduls 10 geschoben werden. Durch diese axiale Bewegung des Ventils 54 kann insbesondere auch das Federelement 56 der Schnittstelle 50 gespannt werden, so dass es bei geöffneter Schnittstelle 50 im gespannten Zustand vorliegt (siehe untere Hälfte von Fig. 3). Im geöffneten Zustand der Schnittstelle 50 bildet sich vorteilhafterweise ein Saugkanal 52 durch die Schnittstelle 50 aus, durch den Staubgut SG und staubbeladene Luft aus dem ersten Staubmodul 10 abgesaugt werden kann. Auf diese Weise kann der Staubsammelbehälter 12 des ersten Staubmoduls 10 unkompliziert und ohne Demontage des Staubmoduls 10 geleert werden. Der Weg der staubbeladenen Luft und des Staubguts SG durch den Saugkanal 52 ist in der unteren Hälfte von Fig. 3 durch den gebogenen, nach unten weisenden Pfeil angedeutet.

Durch die (Vor-)Spannung des Federelements 56 der Schnittstelle 50 kann die Schnittstelle 50 selbst-schließend ausgebildet sein. Wenn der enge Kontakt zwischen dem Einlass-Kontakt 29 und der Schnittstelle 50 nicht mehr besteht, entspannt sich das Federelement 56 vorzugsweise wieder und verschließt zusammen mit dem Ventil 54 den Saugkanal 52. Dadurch kann im geschlossenen Zustand der Schnittstelle 50 keine staubbeladene Luft und kein Staubgut SG zwischen den Staubmodulen 10, 20 ausgetauscht werden.

Figur 4 zeigt schematisch eine bevorzugte Ausgestaltung des Systems 100 mit einem ersten Staubmodul 10 und einem zweiten Staubmodul 20. Das erste Staubmodul 10 ist in der oberen Bildhälfte dargestellt, während das zweite Staubmodul 20 in der unteren Bildhälfte dargestellt ist. Die bevorzugte Ausgestaltung des in Fig. 4 dargestellten ersten Staubmoduls 10 weist einen Einlass-Öffnung 17 und eine Auslass-Öffnung 18 auf, durch die Luft in das Staubmodul 10 eingesagt und später ausgeblasen werden kann. Das eingesaugte Staubgut SG kann in dem Staubsammelbehälter 12 gesammelt werden, wobei in dem Staubsammelbehälter 12 die nicht-arretierbare, pneumatische Schnittstelle 50 angeordnet vorliegen kann. Das erste Staubmodul 10 weist darüber hinaus einen Filter 14 und ein Saugaggregat 16 auf. Die Pfeile mit den unterschiedlichen Füllungen deuten an, dass ein Staubgehalt der Luft beim Durchgang durch das Staubmodul 10 immer stärker abnimmt, sei es dadurch, dass der Staub in dem Staubsammelbehälter 12 verbleibt oder weil die Luft den Filter 14 passiert, wo sie gefiltert wird, so dass der Staubgehalt abnimmt.

Das zweite Staubmodul 20 weist ebenfalls eine Einlass-Öffnung 27 und eine Auslass-Öffnung 28, sowie einen Staubsammelbehälter 22, einen Filter 24 und ein Saugaggregat 26 auf. Durch Verbindung mit dem zweiten Staubmodul 20 kann die Schnittstelle 50 des ersten Staubmoduls 10 geöffnet werden, so dass ein Saugkanal 52 zwischen den Staubmodulen 10, 20 geschaffen wird, über den Staubgut SG von dem ersten Staubmodul 10 in das zweite Staubmodul 20 übertragen werden kann. Der Saugkanal 52 zwischen den Staubmodulen 10, 20 kann vorzugsweise durch die Schnittstelle 50 und den Saugschlauch 40 verlaufen. Es ist im Sinne der Erfindung bevorzugt, dass die Schnittstelle 50 einen im Wesentlichen kreisförmigen Querschnitt aufweist. Selbstverständlich sind auch andere Querschnittsformen denkbar, wie beispielsweise ein elliptischer oder ein ovaler Querschnitt. Selbstverständlich kann der Querschnitt auch eckig, zum Beispiel rechteckig ausgebildet sein. Wenn der Querschnitt der Schnittstelle 50 im Wesentlichen kreisförmig ausgebildet ist, kann es im Sinne der Erfindung bevorzugt sein, dass ein Durchmesser der Schnittstelle in einem Bereich von 2-6 cm liegt, bevorzugt zwischen 2,5 und 5 cm und besonders bevorzugt zwischen 3 und 3,8 cm.

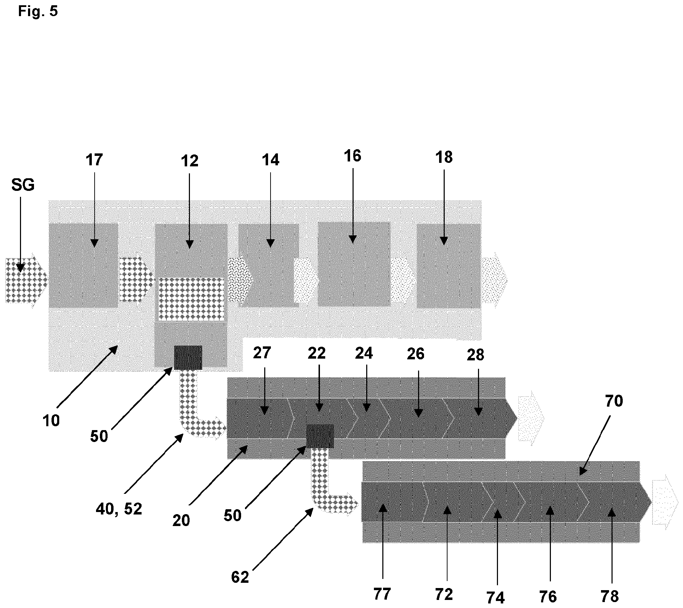

Figur 5 zeigt schematisch eine bevorzugte Ausgestaltung des Systems 100 mit einem ersten Staubmodul 10, einem zweiten Staubmodul 20 und einem dritten Staubmodul 70, das stellvertretend für n weitere Staubmodule steht. Das in Figur 5 dargestellte System 100 entspricht im Wesentlichen dem System 100, das in Figur 4 gezeigt wird. Allerdings ist das System 100 um ein weiteres Staubmodul 70 erweitert, wobei das zusätzliche Staubmodul 70 stellvertretend für eine Vielzahl von Staubmodulen steht, mit denen ein System 100 aus zwei Staubmodulen 10, 20 erweitert werden kann. Beispielsweise kann ein System 100 zwei, drei, vier, fünf, sechs, sieben, acht oder mehr Staubmodule umfassen. Wenn das System 100 beispielsweise acht Staubmodule umfasst, können die Staubmodule 1 bis 7 je eine nicht-arretierbare, pneumatische Schnittstelle 50 umfassen, während das achte Staubmodul dazu dient, das Staubgut SG der Staubmodule 1 bis 7 aufzunehmen. Dabei können die Staubmodule 1 bis 7 vorzugsweise nacheinander mit dem achten Staubmodul verbunden werden, so dass staubbeladene Luft und das Staubgut SG von den Staubmodulen 1 bis 7 in das achte Staubmodul übertragen werden kann. Die Übertragung des Staubguts SG erfolgt vorzugsweise unter Verwendung der Schnittstelle 50 bzw. durch den Saugkanal 52 hindurch, der zwischen den Staubmodulen 10, 20, 70 gebildet wird. Es kann im Sinne der Erfindung auch bevorzugt sein, dass das Staubgut SG des ersten Staubmoduls 10 in das zweite Staubmodul 20 überführt wird und das Staubgut des zweiten Staubmoduls 20 in das dritte Staubmodul 70 und so weiter. Eine solche Situation ist beispielsweise in Fig. 5 dargestellt, wobei der Saugkanal, der sich zwischen dem zweiten Staubmodul 20 und dem weiteren Staubmodul 70 ausgebildet, im Sinne der Erfindung bevorzugt als «Saugkanal 62» bezeichnet wird. In dem in Fig. 5 dargestellten Ausführungsbeispiel des Systems 100 weisen sowohl das erste Staubmodul 10, als auch das zweite Staubmodul 20 eine Schnittstelle 50 zur Übertragung des Staubguts SG auf, während insbesondere das zweite Staubmodul 20 und das weitere Staubmodul 70 Einlass-Kontakte 29 aufweisen können (nicht dargestellt), mit denen die Schnittstelle des n-1-ten Staubmoduls geöffnet werden können.

Das dritte oder weitere Staubmodul 70, das in Fig. 5 dargestellt wird, weist ebenfalls eine Einlass-Öffnung 77 und eine Auslass-Öffnung 78, sowie einen Staubsammelbehälter 72, einen Filter 74 und ein Saugaggregat 76 auf.

### Bezugszeichenliste

- 10: erstes Staubmodul
- 12: Staubsammelbehälter des ersten Staubmoduls, "erster Staubsammelbehälter"
- 14: Filter im ersten Staubmodul
- 16: Saugaggregat im ersten Staubmodul
- 17: Einlass-Öffnung des ersten Staubmoduls
- 18: Auslass-Öffnung des ersten Staubmoduls
- 20: zweites Staubmodul
- 22: Staubsammelbehälter des zweiten Staubmoduls, "zweiter Staubsammelbehälter"
- 24: Filter im zweiten Staubmodul
- 26: Saugaggregat im zweiten Staubmodul
- 27: Einlass-Öffnung des zweiten Staubmoduls
- 28: Auslass-Öffnung des zweiten Staubmoduls
- 29: Einlass-Kontakt
- 40: Saugschlauch
- 42: vorderes Ende des Saugschlauchs
- 44: hinteres Ende des Saugschlauchs
- 50: pneumatische nicht-arretierbare Schnittstelle
- 52: Saugkanal
- 54: Ventil
- 56: Federelement
- 62: Saugkanal zwischen dem n-ten und (n+1)-ten Staubmodul
- 70: n-tes Staubmodul
- 72: Staubsammelbehälter des n-ten Staubmoduls, "n-ter Staubsammelbehälter"
- 74: Filter im n-ten Staubmodul
- 76: Saugaggregat im n-ten Staubmodul
- 77: Einlass-Öffnung des ersten Staubmoduls
- 78: Auslass-Öffnung des ersten Staubmoduls
- 100: System
- 110: Werkzeugmaschine
- 112: Werkzeug der Werkzeugmaschine
- F: Anpresskraft
- S: Vorspannkraft

## Patentansprüche

1. System (100) umfassend ein erstes Staubmodul (10) und ein zweites Staubmodul (20), wobei das erste Staubmodul (10) einen ersten Staubsammelbehälter (12) zur Aufnahme von Staubgut (SG) und das zweite Staubmodul (20) einen zweiten Staubsammelbehälter (22) zur Aufnahme von Staubgut (SG) aufweist,
**dadurch gekennzeichnet, dass**
mindestens eines der beiden Staubmodule (10, 20) eine nicht-arretierbare, pneumatische Schnittstelle (50) zur Verbindung mit dem anderen Staubmodul (20, 10) aufweist, wobei über die Schnittstelle (50) das Staubgut (SG) aus dem Staubsammelbehälter (12, 22) desjenigen Staubmoduls (10, 20), das die Schnittstelle (50) aufweist, absaugbar ist.

2. System (100) nach Anspruch 1
**dadurch gekennzeichnet, dass**
die nicht-arretierbare, pneumatische Schnittstelle (50) selbst-schließend ausgebildet ist.

3. System (10) nach Anspruch 1 oder 2
**dadurch gekennzeichnet, dass**
die nicht-arretierbare, pneumatische Schnittstelle (50) dazu eingerichtet ist, einen Saugkanal (52) zwischen dem ersten Staubmodul (10) und dem zweiten Staubmodul (20) herzustellen.

4. System (100) nach Anspruch 3
**dadurch gekennzeichnet, dass**
der Saugkanal (52) nur so lange besteht, wie eine Anpresskraft F zwischen dem ersten Staubmodul (10) und dem zweiten Staubmodul (20) ausgeübt wird.

5. System (100) nach einem der Ansprüche 3 oder 4
**dadurch gekennzeichnet, dass**
die nicht-arretierbare, pneumatische Schnittstelle (50) ein Ventil (54) zur Freigabe oder zum Verschließen des Saugkanals (52) umfasst.

6. System (100) nach Anspruch 5
**dadurch gekennzeichnet, dass**
das Ventil (54) als Rückschlagventil und/oder einteilig oder mehrteilig ausgebildet ist.

7. System (100= nach einem der vorhergehenden Ansprüche
**dadurch gekennzeichnet, dass**
die nicht-arretierbare, pneumatische Schnittstelle (50) durch einen engen Kontakt und/oder eine Anpresskraft F pneumatisch aktivierbar ist.

8. System (100) nach einem der vorhergehenden Ansprüche
**dadurch gekennzeichnet, dass**
das erste Staubmodul (10) eine Staubsammelbox für eine Werkzeugmaschine ist und das zweite Staubmodul (20) ein separater Staubsauger.

9. System (100) nach Anspruch 8
**dadurch gekennzeichnet, dass**
zumindest das erste Staubmodul (10) die nicht-arretierbare, pneumatische Schnittstelle (50) aufweist, wobei die nicht-arretierbare, pneumatische Schnittstelle (50) in dem Staubsammelbehälter (12) des ersten Staubmoduls (10) vorliegt.

10. System (100) nach einem der vorhergehenden Ansprüche
**dadurch gekennzeichnet, dass**
das Staubmodul (10, 20), das die nicht-arretierbare, pneumatische Schnittstelle (50) aufweist, über die Schnittstelle (50) entleerbar ist, ohne demontiert zu werden.

11. Pneumatische Schnittstelle (50) zwischen einem ersten Staubmodul (10) und einem zweiten Staubmodul (20) zum Absaugen von Staubgut (SG) aus dem ersten Staubmodul (10)

12. Verfahren zum Absaugen von Staubgut (SG) aus einem ersten Staubmodul (10), wobei das erste Staubmodul (10) Bestandteil eines Systems (100) nach einem der vorhergehenden Ansprüche ist und wobei das Verfahren **gekennzeichnet durch die folgenden Verfahrensschritte** ist:
a) Bereitstellung eines ersten Staubmoduls (10), wobei mindestens das erste Staubmodul (10) eine nicht-arretierbare, pneumatische Schnittstelle (50) zur Verbindung des ersten Staubmoduls (10) mit einem zweiten Staubmodul (20) aufweist,
b) Verbinden des ersten Staubmoduls (10) mit dem zweiten Staubmodul (20) über die Schnittstelle (50),
c) Absaugen von Staubgut (SG) aus dem ersten Staubmodul (10) mit Hilfe der Schnittstelle (50).

13. System (100) nach Anspruch 12
**dadurch gekennzeichnet, dass**
das zweite Staubmodul (20) einen Einlass-Kontakt (29) aufweist, der mit der nicht-arretierbaren, pneumatischen Schnittstelle (50) des ersten Staubmoduls (10) in engen Kontakt bringbar ist, so dass ein Saugkanal (52) zwischen dem ersten Staubmodul (10) und dem zweiten Staubmodul (20) gebildet wird.
